Europäisches Patentamt

European Patent Office

Office européen des brevets

(11) Veröffentlichungsnummer: **0 130 147**
A1

## (12) EUROPÄISCHE PATENTANMELDUNG

(21) Anmeldenummer: **84810284.4**

(22) Anmeldetag: **08.06.84**

(51) Int. Cl.⁴: **A 01 G 31/02**

(30) Priorität: **14.06.83 CH 3258/83**

(43) Veröffentlichungstag der Anmeldung:
**02.01.85 Patentblatt 85/1**

(84) Benannte Vertragsstaaten:
**AT DE FR GB IT NL SE**

(71) Anmelder: **INTERHYDRO AG**
**Eigerplatz 5 Hochhaus**
**CH-3007 Bern(CH)**

(72) Erfinder: **Baumann, Gerhard**
**Quellenrain 32**
**Ch-3063 Ittigen(CH)**

(74) Vertreter: **Steiner, Martin et al,**
**c/o AMMANN PATENTANWAELTE AG BERN**
**Schwarztorstrasse 31**
**CH-3001 Bern(CH)**

(54) Gefäss für die Hydrokultur von Pflanzen und Verwendung desselben.

(57) Auf den Rand eines Aussengefässes (1) ist ein Ring (3) aufgesetzt, in dessen Oeffnung ein Kulturtopf (5) eingehängt ist. Der Ring (3) weist eine Oeffnung (7, 8) auf, durch die der Oberteil eines Wasserstandsanzeigers (9, 11) durchragt. Der heraufragende Oberteil (9) dieses Wasserstandsanzeigers kann erfasst werden, um denselben mitsamt dem Ring (3) und dem Kulturtopf (5) aus dem Aussengefäss (1) auszuheben. Es ergibt sich damit ein preisgünstiges, einfaches Gefäss, welches ästhetisch und funktionell den Erfordernissen einer Hydrokultur optimal gerecht wird.

FIG.1

Gefäss für die Hydrokultur von Pflanzen und Verwendung
desselben

Die vorliegende Erfindung betrifft ein Gefäss für die
Hydrokultur von Pflanzen, mit einem Aussengefäss zur
Aufnahme der Nährlösung mit einer Abdeckung, und mit einem in eine Oeffnung der Abdeckung einstellbarem Kulturtopf mit durchbrochener Wandung, welcher zur Aufnahme
des Substrates und der Pflanze bestimmt ist. Ein Gefäss
dieser Art ist im deutschen Gebrauchsmuster Nr.
77 11 822 beschrieben. Es weist ein zweiteiliges Aussengefäss mit einem relativ niedrigen Unterteil und einem
darübergestülpten und mittels Innenrippen auf dem Unterteil abgestützten Oberteil auf. Dieser Oberteil besteht
einteilig mit einer ringförmigen Abdeckung, in deren
Oeffnung der Kulturtopf eingehängt ist. Dieser Kulturtopf ist an einer Stelle mit einem Wasserstandsanzeiger
versehen. Dieses Gefäss ist relativ teuer, indem ausser
einem zweiteiligen Aussengefäss ein zur Aufnahme eines
Wasserstandsanzeigers geeigneter, spezieller Kulturtopf
erforderlich ist. Der verhältnismässig niedrige Unterteil des Aussengefässes ist im Gebrauchszustande praktisch vollständig mit Nährlösung gefüllt, die überschwappen kann, wenn das Gefäss etwas bewegt wird, und
die beim Nachfüllen von Wasser leicht überlaufen kann,
wenn unachtsam gegossen wird. In der Pflege ist man behindert, insbesondere, wenn es darum geht, starkes Wurzelwerk zu schneiden, beispielsweise im Falle einer
Bonsaizucht. Entweder wird nämlich der Oberteil des Aussengefässes mitsamt dem Kulturtopf ausgehoben, in welchem Falle jedoch das Wurzelwerk infolge des Aussengefässes schlecht zugänglich ist, oder aber es wird nur
der Kulturtopf aus dem Oberteil des Aussengefässes ausgehoben, was jedoch infolge der starken Bewurzelung
schwierig ist.

- 2 -  0130147

Es ist das Ziel vorliegender Erfindung, ein Gefäss für die Hydrokultur von Pflanzen zu schaffen, welches einfach und billig herstellbar ist und allen Anforderungen, die ästhetisch und technisch an eine moderne Hydrokultur zu stellen sind, erfüllt. Diese Aufgabe wird gemäss Anspruch 1 gelöst. Es kann in diesem Falle ein üblicher, äusserst billiger Gittertopf verwendet werden, der nicht mit einem Wasserstandsanzeiger kuppelbar zu sein braucht. Das Aussengefäss weist praktisch die volle Höhe des Gefässes auf und ist stets nur teils gefüllt, sodass kein Ueberfliessen von Nährlösung zu befürchten ist. Es ist einfacher, den Wasserstandsanzeiger in korrekter vertikaler Lage am Boden des Aussengefässes aufgestützt zu halten, als wenn er mit dem Kulturtopf verbunden ist. Das Gefäss kann als fugenloses Ganzes erscheinen, indem die Sichtfläche des Ringes bündig oder stufenlos in die Sichtfläche des Aussenbehälters übergeht. Damit trotzdem der Ring mit dem damit verbundenen Kulturtopf und der Pflanze leicht vom Aussengefäss abgehoben werden kann, wird das Gehäuse des Wasserstandsanzeigers vorzugsweise mit einem erweiterten Unterteil ausgeführt oder mit dem Ring derart verbunden, dass der Ring mit dem Kulturtopf mit Hilfe des Wasserstandsanzeigers vom Aussengefäss abhebbar ist. Es ist dann auch bei starker Bewurzelung leicht möglich, den Ring mit dem Kulturtopf und der Pflanze auszuheben, da das Aussengefäss keinerlei verengte Stellen aufweist, um entweder die Nährlösung zu wechseln oder die Wurzeln zu trimmen, z.B. im Falle einer Bonsai-Zucht.

Es ist zwar ein Gefäss für Erdkultur mit Wasservorrat und Saugdocht bekannt, bei welchem ein Tontopf in einen Ring eingehängt ist, der auf dem Rand eines Aussengefässes liegt (US-PS 2 695 474). Im Ring ist eine Führung für den Anzeigestab eines Wasserstandsanzeigers gehalten. Dieses bekannte Gefäss ist für Hydrokultur nicht geeignet und löst nicht die oben erwähnten, besonderen

- 3 -                    0130147

Aufgaben.

Die besonderen Kennzeichen und Vorteile des erfindungsgemässen Gefässes werden im folgenden anhand eines in
der Zeichnung dargestellten Ausführungsbeispiels erläutert.

Figur 1 zeigt einen Vertikalschnitt durch das Gefäss,

Figur 2 zeigt einen Teil-Draufsicht auf das Gefäss, und

Figur 3 zeigt einen Teil-Vertikalschnitt durch eine Ausführungsvariante des Gefässes in besonderer Verwendung.

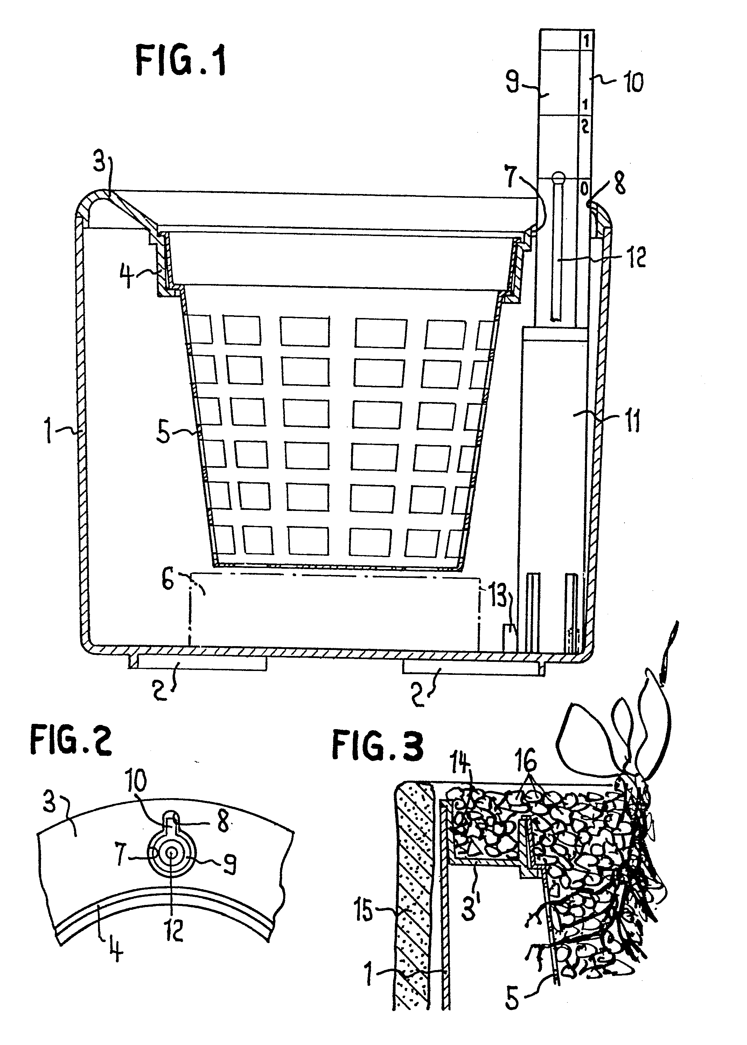

Das in den Figuren 1 und 2 dargestellte Gefäss weist ein
Aussengefäss 1 zylindrischer oder nach oben leicht konisch erweiterter Form auf, das mit Füssen 2 versehen
ist. Auf den oberen Rand des Aussengefässes 1 ist ein
Ring 3 mit nach oben gewölbter Sichtfläche aufgesetzt.
Ein kurzer Stutzen 4 des Ringes 3 bildet eine Haltevorrichtung für einen Kultur-Gittertopf 5 einfachster, handelsüblicher Ausführung. Der Gittertopf 5 hängt am Ring
3, 4, derart, dass sein Boden sich im Abstand über dem
Boden des Aussengefässes 1 befindet. In den Zwischenraum
kann, wie in Figur 1 angedeutet, eine Nährstoffbatterie
6 mit Langzeitdünger eingelegt werden.

An einer Stelle des Ringes 3 befindet sich eine Oeffnung
7, die sich an der Aussenseite als Schlitz 8 fortsetzt.
Diese Oeffnung 7, 8 wird vom durchsichtigen Oberteil 9
eines Wasserstandsanzeigers durchsetzt. Dieser Oberteil
ist als Rohr ausgebildet, an welches ein nach aussen
stehender Flansch 10 anschliesst, welcher in den Schlitz
8 greift. Der Wasserstandsanzeiger ist damit im Ring 3
sicher gehalten und orientiert. Auf dem Flansch 10 stehen Bezeichnungen 0, 1/2, 1, welche die Wasserstandshöhe kennzeichnen. Der Oberteil 9 des Wasserstandsanzeigers ist mit einem rohrförmigen Unterteil 11 verbunden, welcher am unteren Ende Schlitze zum Eintritt der Nährlösung aufweist. Im Unterteil 11 befindet sich ein nicht dargestellter Schwimmer, der einen Anzeigestab 12 trägt. Der Unterteil des Wasserstandsanzeigers greift mit seinem unteren Ende zwischen drei Richtfahnen 13 des Aussengefässes 1 und ist damit in der korrekten, vertikalen Lage gesichert.

Beim Gefäss nach Figuren 1 und 2 befindet sich das Substrat, in welchem die Pflanzenwurzeln ihren Halt finden, ausschliesslich im Gittertopf 5, so dass die Oberseite des Ringes 3 sichtbar bleibt. Es ergibt sich damit eine besonders ästhetische Gestaltung eines scheinbar geschlossenen Gefässes, in welchem die Pflanze steht. Der Wasserstandsanzeiger befindet sich praktisch am äusseren Rand des Gefässes und kann stets gut abgelesen werden. Die Aesthetik des Gefässes und die gute Lesbarkeit des Wasserstandsanzeigers bedingt keinerlei Einbussen hinsichtlich der technischen Vorteile und des niedrigen Preises des Gefässes. Es sind ausschliesslich einfache, preisgünstige Formteile vorhanden.

Das vorhandene Wasservolumen ist gross im Verhältnis zu dem mit Substrat gefüllten Raum im Gittertopf 5. Der verhältnismässig weite Raum zwischen dem Gittertopf 5 und dem Aussengefäss 1 bietet auch Gewähr für eine gute Bewurzelung der Pflanzen, wobei die grosse Wasserreserve durch diese Wurzeln auch optimal genutzt werden kann, insbesondere die Wasserreserve unter dem Gittertopf 5. Der Gittertopf hat hierbei ausser seinem geringen Preis den Vorteil, dass genügend Oeffnungen für den Durchtritt von Wurzeln am ganzen Umfang und über einen grossen Teil der Höhe vorhanden sind. Die Verwendung einfachster Gittertöpfe bringt auch den Vorteil, dass kleine Gittertöpfe mitsamt den Jungpflanzen direkt in grössere Töpfe verpflanzt werden können, ohne dass die Gittertöpfe von den Wurzelballen entfernt werden müssen. Das Gefäss kann nach Belieben mit oder ohne Nährstoffbatterie 6 verwendet werden.

Besondere Vorteile ergeben sich aus der Möglichkeit, mittels des Wasserstandsanzeigers den Ring 3 mitsamt dem Gittertopf 5 und dem darin befindlichen Substrat und der Pflanze auszuheben. Man braucht lediglich den Oberteil 9 des Wasserstandsanzeigers zu erfassen und anzuheben, in welchem Falle der Ring 3 mit dem Gittertopf und der darin befindlichen Pflanze ausgehoben wird. Das Ausheben bietet hierbei selbst bei sehr starker Bewurzelung keinerlei Probleme, weil das Aussengefäss keinerlei verengte Stellen aufweist. Zum Auswechseln der Nährstoffbatterie 6 und/oder der Nährlösung braucht man also lediglich am Wasserstandsanzeiger den Ring 3, den Gittertopf 5 und die darin befindliche Pflanze auszuheben, worauf der Inhalt des Aussengefässes 1 ausgegossen werden kann. Man braucht dann lediglich eine neue Nährstoffbatterie 6 einzusetzen, sofern erwünscht, und dann kann der Ring 3 mit dem Gittertopf 5 wieder aufgesetzt werden. Auch dieses Einsetzen, selbst stark bewurzelter Pflanzen, bietet keinerlei Probleme. Da der Gittertopf nur in einem Ring geringer Höhe hängt, sind die Wurzeln bei ausgehobenem Gittertopf von der Seite frei zugänglich und können gegebenenfalls gestutzt werden, was im Falle einer Bonsaizucht von besonderem Interesse ist.

Das einteilige Aussengefäss 1, dessen Höhe im wesentlichen der Gesamthöhe des Gefässes entspricht, stellt gegenüber einem zweiteiligen Gefäss nicht nur eine Vereinfachung und Verbilligung dar, sondern es erleichtert auch die Manipulation des Gefässes, sei es nun leer oder bepflanzt.

Es sei schliesslich erwähnt, dass der Abdeckring 3 die Wasserverdunstung erheblich herabsetzt. Der Vorteil eines verhältnismässig grossen Wasservolumens wird daher auch nicht geschmälert durch eine entsprechend grosse Verdunstungsfläche.

Figur 3 zeigt eine Ausführungsvariante des Gefässes sowie eine besondere Anwendung desselben. Entsprechende Teile sind in Figur 3 gleich bezeichnet wie in Figur 1. Der Ring 3 ist ersetzt durch einen Spezialring 3', der nicht nach aussen gewölbt ist, sondern am Rand eine Nut 14 bildet, deren äussere Wand höher ist als die innere. Im übrigen erfüllt der Ring 3' die gleiche Funktion wie der Ring 3, nämlich die Verbindung des Aussengefässes 1 mit dem Gittertopf 5, den Abschluss des Gefässes nach oben zur Verminderung der Verdunstung und die in Figur 3 nicht dargestellte Halterung des Wasserstandsanzeigers. Die Ausführungsvariante des Gefässes gemäss Figur 3 wird vorzugsweise zusammen mit Ziergefässen, insbesondere Keramikgefässen, verwendet. Ein Teil der Wand eines solchen Ziergefässes 15 ist dargestellt. Das Gefäss 1 wird in diesem Falle in das Ziergefäss 15 eingesetzt, nachdem der ganze Raum innerhalb des Gefässes 1 mit Substrat 16 gefüllt wurde, so dass der Ring 3 und der Einsatztopf 5 von oben überhaupt nicht mehr sichtbar sind. Die Pflanze ist dann scheinbar in einen Einsatztopf gepflanzt, welcher direkt in das Ziergefäss 15 gestellt ist.

Es kann allerdings auch das Gefäss 1 mit dem Ring 3', gemäss Figur 3, verwendet werden, ohne in ein Ziergefäss eingesetzt zu werden. In einer Ausführungsvariante wäre es auch möglich, den Wasserstandsanzeiger statt mit dem Ring 3 bzw. 3' mit dem Kulturtopf 5 derart zu verbinden, dass durch Zug am Wasserstandsanzeiger der Kulturtopf mit oder ohne Ring 3 bzw. 3' gehoben werden kann. In einer weiteren Ausführungsvariante kann die Skala zur Anzeige des Wasserstandes dadurch vereinfacht werden, dass der Kamm des Ringes 3 oder dessen Aussenfläche im Bereiche des Schlitzes 8 die Nullmarke bildet, so dass nur
noch Marken für halben und höchsten Wasserstand vorzusehen sind.

Anstelle der drei Richtfahnen 13 könnten am Ring 3, bzw.
3' einwärts, bzw. abwärts gerichtete, die Oeffnung 7 umgebende Lappen oder ein Kragen vorgesehen sein, wobei in
jedem Falle im Bereiche des Schlitzes 8 kein Lappen vorhanden sein darf, bzw. der Kragen eine Lücke zur Aufnahme des Flansches 10 des Wasserstandsanzeigers aufweisen
muss. Diese Lappen oder Kragen, vorzugsweise ein durch
axiale Schlitze in einzelne Lappen aufgeteilter Kragen,
könnten so lang ausgeführt sein, dass er einen Anschlag
für den unteren Teil grösseren Durchmessers des Wasserstandsanzeigers zur Bestimmung dessen axialer Stellung
im Gefäss bildet. Vorzugsweise kann aber der Flansch 4
des Ringes 3 mit seiner unteren Stirnfläche den Anschlag
zur Bestimmung der axialen Lage des Wasserstandsanzeigers bilden. Die Montage und Handhabung sind besonders
einfach, weil man nicht darauf zu achten braucht, dass
der Wasserstandsanzeiger beim Aufsetzen des Ringes 3,
bzw. 3' sich genau über den Richtfahnen befindet, d.h.
der Ring 3, bzw. 3' kann in beliebiger Drehlage aufgesetzt werden.

Das Gefäss muss nicht kreisrunden Querschnitt aufweisen
sondern kann auch mehreckig, insbesondere quadratisch,
oder rechteckig ausgeführt sein. In den Ring, der im
Falle eines langgestreckten Gefässes in der Art eines
Blumenkistchens als rechteckige Abdeckung ausgebildet
ist, können in Längsrichtung mehrere Oeffnungen zum einhängen von Kulturtöpfen vorgesehen sein. Mehrere Oeffnungen zum einhängen mehrerer Kulturtöpfe könnten allerdings auch bei grösseren, runden oder mehreckigen Gefässen vorgesehen sein.

Patentansprüche

1. Gefäss für die Hydrokultur von Pflanzen, mit einem Aussengefäss (1) zur Aufnahme der Nährlösung mit einer Abdeckung (3), und mit einem in eine Oeffnung der Abdeckung einstellbarem Kulturtopf (5) mit durchbrochener Wandung, welcher zur Aufnahme des Substrates (16) und der Pflanze bestimmt ist, dadurch gekennzeichnet, dass die Abdeckung als Ring (3) ausgebildet ist, in dessen Oeffnung der Kulturtopf (5) einhängbar ist, und dass das Gehäuse (9, 11) eines Wasserstandsanzeigers (9 - 12) eine Oeffnung des Ringes (3) in vertikaler Lage durchsetzt.

2. Gefäss nach A. 1, d.g., dass das Gehäuse (9, 11) des Wasserstandsanzeigers (9 - 12) bis an den Boden des Aussengefässes (1) reicht bzw. dort abgestützt ist.

3. Gefäss nach A. 1 oder 2, d.g., dass das Gehäuse (9, 11) des Wasserstandsanzeigers (9 - 12) mit einem erweiterten Unterteil (11) ausgebildet ist, oder mit dem Ring (3) derart verbunden ist, dass der Ring (3) mit dem Kulturtopf (5) mit Hilfe des Wasserstandsanzeigers vom Aussengefäss (1) abhebbar ist.

4. Gefäss nach einem der Ansprüche 1 - 3, dadurch gekennzeichnet, dass als Kulturtopf ein einfacher Gittertopf (5) vorhanden ist.

5. Gefäss nach einem der Ansprüche 1 - 4, dadurch gekennzeichnet, dass zwischen dem im Ring (3) hängenden Kulturtopf (5) und dem Boden des Aussengefässes (1) ein Raum, zum Beispiel zur Aufnahme einer Nährstoffbatterie (6) verbleibt.

6. Gefäss nach einem der Ansprüche 1 - 5, dadurch gekennzeichnet, dass am Boden des Aussengefässes (1) Richtorgane (13) für den Wasserstandsanzeiger (9, 11)

- 9 -

0130147

vorgesehen sind.

7. Gefäss nach einem der Ansprüche 1 - 6, dadurch gekennzeichnet, dass das Aussengefäss (1) zylindrisch oder sich nach oben erweiternd ausgebildet ist.

8. Gefäss nach einem der Ansprüche 1 - 7, dadurch gekennzeichnet, dass der Ring (3) eine nach oben gewölbte Sichtfläche aufweist.

9. Gefäss nach einem der Ansprüche 1 - 8, dadurch gekennzeichnet, dass der Ring (3') eine Ringnut (14) zur Aufnahme von Substrat (16) bildet.

10. Verwendung des Gefässes nach Anspruch 1, dadurch gekennzeichnet, dass es mit seinem Aussengefäss (1) in ein Ziergefäss (15), zum Beispiel ein Keramikgefäss, eingesetzt ist, und dass der Ring (3) bis zur Wand des Innengefässes (1) mit Substrat bedeckt ist.

# FIG.1

# FIG.2

# FIG.3

**0130147**
Nummer der Anmeldung

# EUROPÄISCHER RECHERCHENBERICHT

Europäisches
Patentamt

EP   84 81 0284

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| D,X | US-A-2 695 474  (BARSTON)<br>* Spalte 1, Zeile 58 - Spalte 2, Zeile 30; Figur 1 * | 1,5,7 | A 01 G   31/02 |
| A | DE-U-7 610 967  (BÖHME)<br>* Anspruch 1 * | 1 | |
| A | FR-A-2 249 606  (BURGUNDA)<br>* Seite 3, Zeile 28 - Seite 4, Zeile 41; Figuren 1,2,3 * | 4,7 | |
| A | FR-A-2 041 453  (INJECTAPLASTIC)<br>* Seite 2, Zeile 38 - Seite 3, Zeile 11; Figur 1 * | 6 | |

|   |
|---|
| RECHERCHIERTE SACHGEBIETE (Int. Cl. ³) |
| A 01 G   31/00<br>A 01 G   31/02<br>A 01 G   27/00 |

Der vorliegende Recherchenbericht wurde für alle Patentansprüche erstellt.

| Recherchenort | Abschlußdatum der Recherche | Prüfer |
|---|---|---|
| DEN HAAG | 17-09-1984 | HERYGERS J.J. |

EPA Form 1503 03 82